# EUROPEAN PATENT SPECIFICATION

(11) **EP 3 602 161 B1**
(45) Date of publication and mention of the grant of the patent: **01.05.2024**
(21) Application number: 18716721.8
(22) Date of filing: 16.03.2018
(51) Int. Cl.: G02B 6/44

(54) **OPTICAL CABLE WITH CHANNEL STRUCTURE**
OPTISCHES KABEL MIT KANALSTRUKTUR
CÂBLE OPTIQUE À STRUCTURE DE CANAL

(30) Priority: 22.03.2017 US 201762474864 P
(43) Date of publication of application: 05.02.2020
(73) Proprietor: Dow Global Technologies LLC, Midland, MI 48674 (US)
(72) Inventor: KMIEC, Chester J., Collegeville, PA 19426 (US); ESSEGHIR, Mohamed, Collegeville, PA 19426 (US); HUANG, Wenyi, Midland, MI 48667 (US)
(74) Representative: Boult Wade Tennant LLP
(86) International application number: PCT/US2018/022946
(87) International publication number: WO 2018/175253

(56) References cited:
- EP-A2- 2 381 285
- DE-A1- 4 040 715
- DE-A1- 19 628 457
- FR-A1- 2 428 849
- GB-A- 2 123 978
- GB-A- 2 168 824
- JP-A- H08 110 450
- US-A- 4 038 489
- US-A1- 2007 025 668
- US-B1- 6 671 441
- US-B1- 7 272 282

## Description

### BACKGROUND

Optical fiber cable (hereafter "optical cable") has been in use in the communications industry for a number of years to transmit information at very high rates over long distances. In an optical cable, information is carried in the form of light signals through optical fibers (typically glass or plastic) with diameters on the order of 10² microns. The optical fibers are protected from the environment and external stresses by cable structures in which they are housed.

Conventional optical cable may be classified into three general classifications based on cable structure: (i) loose tube, (ii) monotube, and (iii) slotted core. Loose tube cable structure is experiencing rapid development. In loose tube optical cables, the optical fibers lie in a plurality of buffer tubes. A "buffer tube" is a conduit, contained within an optical cable through which one or more optical fibers extend. Buffer tubes are generally filled with some type of water blocking compound such as a grease. In the loose tube optical cable structure, buffer tubes are stranded around a central member. The buffer tube is an important component because the buffer tube encases the optical fibers and (i) mechanically isolates the optical fibers, (ii) protects the fragile (and expensive) optical fibers from physical damage protection against impacts, (iii) facilitates handling of the fiber, and (iv) enables ready optical fiber identification.

A typical construction of an optical cable with loose buffer tubes is structured with buffer tubes positioned radially around a central strength member and wrapped in a helical rotation in the axial length. The arrangement of buffer tubes in a helical rotation allows bending of the cable without significant stretching of the tube or optic fibers contained within. The buffer tubes are typically filled with optic cable grease incorporating hydrocarbon oil surrounding the optical fibers and eliminating air space. The grease provides a barrier against water penetration, which can be detrimental to the optic transmission performance. One or more foamed filler rods can be used as low cost spacers to occupy one or more buffer tube positions to maintain cable geometry. Typically, a water blocking functionality is incorporated into the cable core via use of components such as yarns or core wraps that incorporate water-swellable super absorbent polymers. The elements are surrounded within a jacket, which is typically composed of an ethylene-based polymer.

The art recognizes the need for new optical cable constructions with greater optical fiber density while simultaneously maintaining suitable strength and crush resistance (high modulus), grease resistance, good impact performance, and low shrinkage.

GB 2 123 978 B discloses an optical fiber cable with an elongated member comprising channels containing fibers.

### SUMMARY

The present disclosure provides an optical cable. In an embodiment, the optical cable includes an elongated member comprising a matrix material and a plurality of channels extending through the matrix material. The optical cable also includes at least one optical fiber extending through at least one channel.

### BRIEF DESCRIPTION OF THE DRAWINGS

Figure 1 is a perspective view of an optical cable in accordance with an embodiment of the present disclosure.
Figure 2 is a sectional view of the optical cable of taken along line 2-2 of Figure 1.
Figure 3 is a perspective view of an optical cable in accordance with an embodiment of the present disclosure.
Figure 4 is a perspective view of an optical cable in accordance with an embodiment of the present disclosure.
Figure 5 is a perspective view of a prior art optical cable having buffer tubes.
Figure 6 is a perspective view of an optical cable in accordance with an embodiment of the present disclosure.

### DEFINITIONS AND TEST METHODS

Any reference to the Periodic Table of Elements is that as published by CRC Press, Inc., 1990-1991. Reference to a group of elements in this table is by the new notation for numbering groups.

The numerical ranges disclosed herein include all values from, and including, the lower and upper value. For ranges containing explicit values (e.g., 1 or 2; or 3 to 5; or 6; or 7), any subrange between any two explicit values is included (e.g., 1 to 2; 2 to 6; 5 to 7; 3 to 7; 5 to 6; etc.).

Unless stated to the contrary, implicit from the context, or customary in the art, all parts and percents are based on weight and all test methods are current as of the filing date of this disclosure.

The terms "comprising," "including," "having" and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term "consisting essentially of" excludes from the scope of any succeeding recitation any other component, step, or procedure, excepting those that are not essential to operability. The term "consisting of" excludes any component, step, or procedure not specifically delineated or listed. The term "or," unless stated otherwise, refers to the listed members individually as well as in any combination. Use of the singular includes use of the plural and vice versa.

A "core tube" (also known as a "central tube") is a central structural member that extends through an optical cable to prevent buckling and control shrinkage. The core tube may or may not contain optical fibers. When the core tube does contain optical fibers, the optical fibers are bundled together and the bundles are embedded in a filling material surrounded by a cylindrical core tube. When the core tube contains optical fibers, the core tube is typically larger in diameter than a buffer tube to accommodate the bundles of optic fibers or ribbon components containing the optic fibers.

A "conductor" is one or more wire(s), or one or more fiber(s), for conducting heat, light, and/or electricity. The conductor may be a single-wire/fiber or a multiwire/fiber and may be in strand form or in tubular form. Nonlimiting examples of suitable conductors include carbon and various metals, such as silver, gold, copper, and aluminum. The conductor may also be optical fiber made from either glass or plastic. The conductor may or may not be disposed in a protective sheath. A "cable" is a conductor whereby two or more wires, or two or more optical fibers, are bound together, optionally in a common insulation covering. The individual wires or optical fibers inside the covering may be bare, covered, or insulated. Combination cables may contain both electrical wires and optical fibers. The cable may be a communication cable with optical fiber, metal wire (such as copper wire), and combinations thereof. Nonlimiting examples of cable designs are illustrated in USP 5,246,783; 6,496,629; and 6,714,707.

Density is measured in accordance with ASTM D792. The result is recorded in grams (g) per cubic centimeter (g/cc or g/cm³).

An "ethylene-based polymer" is a polymer that contains more than 50 weight percent polymerized ethylene monomer (based on the total amount of polymerizable monomers) and, optionally, may contain at least one comonomer. Ethylene-based polymer includes ethylene homopolymer, and ethylene copolymer (meaning units derived from ethylene and one or more comonomers). The terms "ethylene-based polymer" and "polyethylene" may be used interchangeably. Nonlimiting examples of ethylene-based polymer (polyethylene) include low density polyethylene (LDPE) and linear polyethylene. Nonlimiting examples of linear polyethylene include linear low density polyethylene (LLDPE), ultra-low density polyethylene (ULDPE), very low density polyethylene (VLDPE), multi-component ethylene-based copolymer (EPE), ethylene/α-olefin multi-block copolymers (also known as olefin block copolymer (OBC)), single-site catalyzed linear low density polyethylene (m-LLDPE), substantially linear, or linear, plastomers/elastomers, medium density polyethylene (MDPE), and high density polyethylene (HDPE). Generally, polyethylene may be produced in gas-phase, fluidized bed reactors, liquid phase slurry process reactors, or liquid phase solution process reactors, using a heterogeneous catalyst system, such as Ziegler-Natta catalyst, a homogeneous catalyst system, comprising Group 4 transition metals and ligand structures such as metallocene, non-metallocene metal-centered, heteroaryl, heterovalent aryloxyether, phosphinimine, and others. Combinations of heterogeneous and/or homogeneous catalysts also may be used in either single reactor or dual reactor configurations.

"Ethylene plastomers/elastomers" are substantially linear, or linear, ethylene/α-olefin copolymers containing homogeneous short-chain branching distribution comprising units derived from ethylene and units derived from at least one C₃-C₁₀ α-olefin comonomer, or at least one C₄-C₈ α-olefin comonomer, or at least one C₆-C₈ α-olefin comonomer. Ethylene plastomers/elastomers have a density from 0.870 g/cc, or 0.880 g/cc, or 0.890 g/cc to 0.900 g/cc, or 0.902 g/cc, or 0.904 g/cc, or 0.909 g/cc, or 0.910 g/cc, or 0.917 g/cc. Nonlimiting examples of ethylene plastomers/elastomers include AFFINITY^{™} plastomers and elastomers (available from The Dow Chemical Company), EXACT^{™} Plastomers (available from ExxonMobil Chemical), Tafmer^{™} (available from Mitsui), Nexlene^{™} (available from SK Chemicals Co.), and Lucene^{™} (available LG Chem Ltd.).

Hardness is measured according to the Shore D hardness scale and is reported without units.

"High density polyethylene" (or "HDPE") is an ethylene homopolymer or an ethylene/α-olefin copolymer with at least one C₄-C₁₀ α-olefin comonomer, or C₄ α-olefin comonomer and a density from greater than 0.94 g/cc, or 0.945 g/cc, or 0.95 g/cc, or 0.955 g/cc to 0.96 g/cc, or 0.97 g/cc, or 0.98 g/cc. The HDPE can be a monomodal copolymer or a multimodal copolymer. A "monomodal ethylene copolymer" is an ethylene/C₄-C₁₀ α-olefin copolymer that has one distinct peak in a gel permeation chromatography (GPC) showing the molecular weight distribution. A nonlimiting example of a suitable HDPE includes AXELERON^{™} FO 6318 BK CPD, available from The Dow Chemical Company.

A "jacket" is a coating on the conductor. The jacket may be in direct contact with the conductor. Alternatively, one or more intervening layers may be present between the jacket and the conductor.

"Linear low density polyethylene" (or "LLDPE") is a linear ethylene/α-olefin copolymer containing heterogeneous short-chain branching distribution comprising units derived from ethylene and units derived from at least one C₃-C₁₀ α-olefin comonomer or at least one C₄-C₈ α-olefin comonomer, or at least one C₆-C₈ α-olefin comonomer. LLDPE is characterized by little, if any, long chain branching, in contrast to conventional LDPE. LLDPE has a density from 0.916 g/cc to 0.925 g/cc. Nonlimiting examples of LLDPE include TUFLIN^{™} linear low density polyethylene resins (available from The Dow Chemical Company), DOWLEX^{™} polyethylene resins (available from the Dow Chemical Company), MARLEX^{™} polyethylene (available from Chevron Phillips), and AXELERON^{™} GP 6059 CPD (available from The Dow Chemical Company).

"Low density polyethylene" (or "LDPE") is an ethylene homopolymer, or an ethylene/α-olefin copolymer comprising at least one C₃-C₁₀ α-olefin, or a C₃-C₄ α-olefin, that has a density from 0.915 g/cc to 0.925 g/cc and contains long chain branching with broad molecular weight distribution (MWD). LDPE is typically produced by way of high pressure free radical polymerization (tubular reactor or autoclave with free radical initiator). Nonlimiting examples of LDPE include MarFLex^{™} (Chevron Phillips), LUPOLEN^{™} (LyondellBasell), AXELERON^{™} GP C-0588 BK CPD (The Dow Chemical Company), as well as LDPE products from Borealis, Ineos, ExxonMobil, and others.

"Medium density polyethylene" (or "MDPE") is an ethylene homopolymer, or an ethylene/α-olefin copolymer comprising at least one C₃-C₁₀ α-olefin, or a C₃-C₄ α-olefin, that has a density from 0.926 g/cc to 0.940 g/cc. Nonlimiting examples of suitable MDPE include AXELERON^{™} FO 6548 BK CPD, AXELERON^{™} FO 6549 NT CPD, AXELERON^{™} FO 8864 NT CPD, and AXELERON^{™} FO 8864 BK CPD, each available from The Dow Chemical Company.

Melt temperature, or "Tₘ" as used herein (also referred to as a melting peak in reference to the shape of the plotted DSC curve) is typically measured by the DSC (Differential Scanning Calorimetry) technique for measuring the melting points or peaks of polyolefins, as described in USP 5,783,638. It should be noted that many blends comprising two or more polyolefins will have more than one melting point or peak, many individual polyolefins will comprise only one melting point or peak.

"Multi-component ethylene-based copolymer" (or "EPE") comprises units derived from ethylene and units derived from at least one C₃-C₁₀ α-olefin comonomer, or at least one C₄-C₈ α-olefin comonomer, or at least one C₆-C₈ α-olefin comonomer, such as described in patent references USP 6,111,023; USP 5,677,383; and USP 6,984,695. EPE resins have a density from 0.905 g/cc, or 0.908 g/cc, or 0.912 g/cc, or 0.920 g/cc to 0.926 g/cc, or 0.929 g/cc, or 0.940 g/cc, or 0.962 g/cc. Nonlimiting examples of EPE resins include ELITE^{™} enhanced polyethylene (available from The Dow Chemical Company), ELITE AT^{™} advanced technology resins (available from The Dow Chemical Company), SURPASS^{™} Polyethylene (PE) Resins (available from Nova Chemicals), and SMART^{™} (available from SK Chemicals Co.).

A "multimodal ethylene copolymer" is an ethylene/C₄-C₁₀ α-olefin copolymer that has at least two distinct peaks in a GPC showing the molecular weight distribution. Multimodal includes copolymer having two peaks (bimodal) as well as copolymer having more than two peaks. Nonlimiting examples of HDPE include DOW^{™} High Density Polyethylene (HDPE) Resins (available from The Dow Chemical Company), ELITE^{™} Enhanced Polyethylene Resins (available from The Dow Chemical Company), CONTINUUM^{™} Bimodal Polyethylene Resins (available from The Dow Chemical Company), LUPOLEN^{™} (available from LyondellBasell), as well as HDPE products from Borealis, Ineos, and ExxonMobil.

An "olefin-based polymer" or "polyolefin" is a polymer that contains more than 50 weight percent polymerized olefin monomer (based on total amount of polymerizable monomers), and optionally, may contain at least one comonomer. Nonlimiting examples of olefin-based polymer include ethylene-based polymer and propylene-based polymer.

An "optical fiber" is a flexible, transparent fiber made by drawing glass or plastic to a diameter of several hundred microns or less. Typical optical fiber has a diameter from 230 micrometers (µm) to 270 µm, or 250 µm. The diameter of the optical fiber may or may not include a cladding and/or a coating surrounding the optical fiber. Optical fiber is used most often as a way to transmit light between the two ends of the fiber. Optical fiber finds wide usage in fiber-optic communications, where it enables transmission over distances and at data rates greater than wire cables.

"Optical fiber ribbon" is a structure whereby one or more individual optical fibers are directly extruded upon with a polymeric sheath material.

A "polymer" is a compound prepared by polymerizing monomers, whether of the same or a different type, that in polymerized form provide the multiple and/or repeating "units" or "mer units" that make up a polymer. The generic term polymer thus embraces the term homopolymer, usually employed to refer to polymers prepared from only one type of monomer, and the term copolymer, usually employed to refer to polymers prepared from at least two types of monomers. It also embraces all forms of copolymer, e.g., random, block, etc. The terms "ethylene/α-olefin polymer" and "propylene/α-olefin polymer" are indicative of copolymer as described above prepared from polymerizing ethylene or propylene respectively and one or more additional, polymerizable α-olefin monomer. It is noted that although a polymer is often referred to as being "made of" one or more specified monomers, "based on" a specified monomer or monomer type, "containing" a specified monomer content, or the like, in this context the term "monomer" is understood to be referring to the polymerized remnant of the specified monomer and not to the unpolymerized species. In general, polymers herein are referred to has being based on "units" that are the polymerized form of a corresponding monomer.

A "propylene-based polymer" is a polymer that contains more than 50 weight percent polymerized propylene monomer (based on the total amount of polymerizable monomers) and, optionally, may contain at least one comonomer.

A "sheath" is a generic term and when used in relation to cables, it includes insulation coverings or layers, protective jackets and the like.

Secant modulus (1%) is measured in accordance with ASTM D 632 with results reported in megaPascal (MPa).

Strain at break is measured in accordance with the ASTM D638 testing procedure on compression molded samples prepared according to ASTM D4703. Strain at break is the strain on a sample when it breaks, expressed as a percent.

Tensile strength is measured in accordance with the ASTM D638 testing procedure on compression molded samples prepared according to ASTM D4703. Tensile strength is reported in megaPascal (MPa).

"Ultra low density polyethylene" (or "ULDPE") and "very low density polyethylene" (or "VLDPE") each is a linear ethylene/α-olefin copolymer containing heterogeneous short-chain branching distribution comprising units derived from ethylene and units derived from at least one C₃-C₁₀ α-olefin comonomer, or at least one C₄-C₈ α-olefin comonomer, or at least one C₆-C₈ α-olefin comonomer. ULDPE and VLDPE each has a density from 0.885 g/cc, or 0.90 g/cc to 0.915 g/cc. Nonlimiting examples of ULDPE and VLDPE include ATTANE^{™} ultra low density polyethylene resins (available form The Dow Chemical Company) and FLEXOMER^{™} very low density polyethylene resins (available from The Dow Chemical Company).

### DETAILED DESCRIPTION

The present disclosure provides an optical cable. In an embodiment, the optical cable includes an elongated member. The elongated member includes (1) a matrix material and (2) a plurality of channels extending through the matrix material. The optical cable further includes at least one optical fiber extending through at least one channel.

### 1. Elongated member

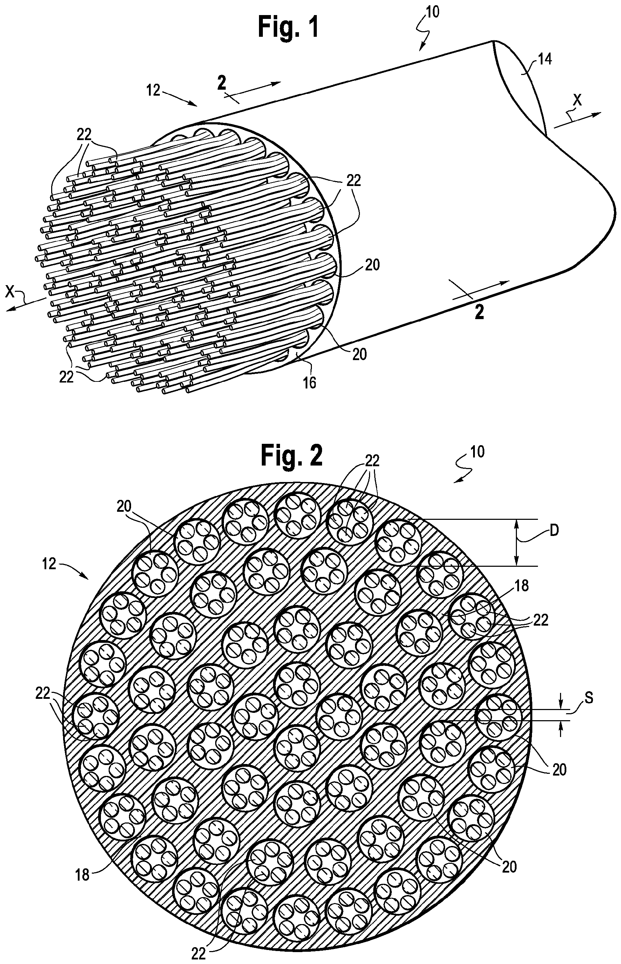

The present optical cable includes an elongated member. Figures 1-2 depict an embodiment of an optical cable 10 having an elongated member 12. The elongated member 12 has a first end 14 and a second end 16. It is understood that the length of the elongated member 12 is not limited. The elongated member 12 (and/or the optical cable 10) can have a length from 1 centimeter (cm), or 1 meter (m), or 100 meters to 1000 meters, or many thousands of meters, or more.

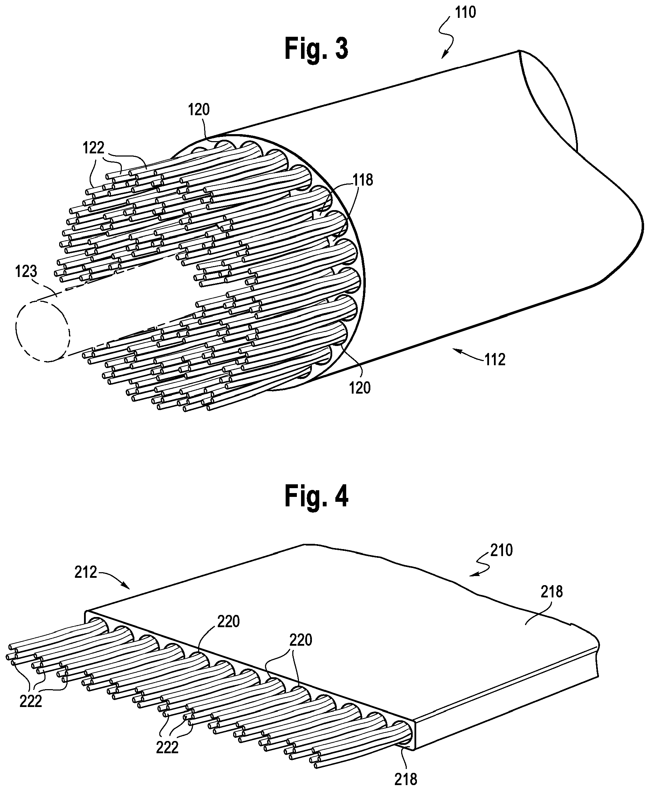

The elongated member can be a core structure or an annular structure. The elongated member can also have a flat structure. The elongated member can also have a hybrid structure. Figures 1 and 2 show an elongated member with a core structure. Figure 3 shows an elongated member with an annular structure. Figure 4 shows an elongated member with a flat structure. Each structure type will be described in detail below.

The elongated member 12 has a cross-sectional shape. Nonlimiting examples of suitable cross-sectional shapes for the elongated member 12 include an ellipse, a polygon, and combinations thereof.

In an embodiment, the elongated member 12 has a polygon cross-sectional shape. A "polygon" is a closed-plane figure bounded by at least three sides. The polygon can be a regular polygon, or an irregular polygon having three, four, five, six, seven, eight, nine, ten or more sides. Nonlimiting examples of suitable polygonal shapes include triangle, square, rectangle, diamond, trapezoid, parallelogram, hexagon and octagon.

In an embodiment, the elongated member 12 has an ellipse cross-sectional shape. An "ellipse" is a plane curve such that the sum of the distances of each point in its periphery from two fixed points, the foci, are equal. The ellipse has a center which is the midpoint of the line segment linking the two foci. The ellipse has a major axis (the longest diameter through the center). The minor axis is the shortest line through the center. The ellipse center is the intersection of the major axis and the minor axis. A "circle" is a specific form of ellipse, where the two focal points are in the same place (at the circle's center). Nonlimiting examples of ellipse shapes include circle, oval, and ovoid.

In an embodiment, the elongated member 12 has a cross-sectional shape that is an ellipse, such as a circle or substantially a circle, as shown in Figures 1 and 2.

The elongated member 12 is composed of a matrix material 18. The matrix material 18 is a polymeric material, or a blend of two or more polymeric materials.

The matrix material 18 is composed of one or more polymeric materials. The matrix material 18 may also include one or more optional additives. According to the claimed invention, suitable polymeric materials for the matrix material 18 include polybutylene terephthalate ("PBT"), polycarbonate, and combinations thereof.

In an embodiment, the polymeric material for the matrix material 18 is PBT, polycarbonate, and combinations thereof.

The polymeric material for the matrix material may or may not include an additive. Nonlimiting examples of suitable additives include nucleating agent, antioxidants, colorants, ultra violet (UV) absorbers or stabilizers, anti-blocking agents, flame retardants, compatibilizers, plasticizers, fillers, processing aids, crosslinking agents (e.g., peroxides), and combinations thereof.

In an embodiment, the polymeric material includes an antioxidant. Nonlimiting examples of suitable antioxidants include phenolic antioxidants, thio-based antioxidants, phosphate-based antioxidants, and hydrazine-based metal deactivators. In a further embodiment, the polymeric material includes an antioxidant, such as IRGANOX 1035, present in an amount from 0.1 wt%, or 0.2 wt%, or 0.3 wt%, or 0.5 wt% to 0.6 wt%, or 0.8 wt%, or 1.0 wt% based on the total weight of the polymeric material.

In an embodiment, the nucleating agent is blended into the matrix material that is a propylene-based polymer or an ethylene-based polymer. Nonlimiting examples of suitable nucleating agents include D-sorbitol derivatives, salts of aliphatic monobasic or dibasic acids, aralkyl acids, or alkali metal or aluminum salts of aromatic or alicyclic carboxylic acids, talc, cyclohexanedicarboxylic acid metal salt (calcium, sodium, zinc, potassium, magnesium and aluminum), metal carbonates, metal oxides, metal salts of aliphatic or aromatic mono- or dicarboxylic acids, C₈ to C₂₄ saturated fatty acids, crystalline silica (quartz), C₁ to C₁₈ alkyl benzoates, dibenzylidene sorbitols and derivatives, 2,6-naphthalene dicarboxamides, polyvinylcyclohexane, high crystallinity polypropylenes (HCPPs), branched polypropylenes, and any combinations thereof.

In an embodiment, the polymeric material includes a filler. Nonlimiting examples of suitable fillers include zinc oxide, zinc borate, zinc molybdate, zinc sulfide, clays such as organo-clay, carbon black, calcium carbonate, glass fiber, talc, carbon black, aluminum tri-hydride, magnesium hydroxide, CoO, TiO₂, Sb₂O₃, ZnO, Fe₂O₃, sand, dolomite, silica, mica, wollastonite, feldspar, aluminum silicate, alumina, hydrated alumina, glass bead, glass microsphere, ceramic microsphere, thermoplastic microsphere, barite, wood flour, and any combination thereof. The filler may or may not have flame retardant properties. If used, the amount of the filler in the composition can be from greater than 0 to 60 wt%, or from 1 to 50 wt%, or from 5 to 40 wt% of the weight of the composition.

In an embodiments, a nucleating agent, e.g., talc, calcium carbonate, etc., can also act as a filler, and vice versa.

In an embodiment, the polymeric material includes a flame retardant, alone or in combination with the filler. In other words, the filler may also function as a flame retardant. Nonlimiting examples of suitable flame retardant include halogenated and halogen-free materials. In the latter category, metal hydroxides such as alumina trihydrate (AI(OH)3) and barium sulfate, and magnesium hydroxide (Mg(OH)2).

In an embodiment, the polymeric material includes a processing aid. Nonlimiting examples of suitable processing aids include oils, organic acids (such as stearic acid), and metal salts of organic acids (such as zinc stearate).

The elongated member 12 may comprise two or more embodiments disclosed herein.

### 2. Channels

The present optical cable includes a plurality of channels. A "channel" is an elongated void extending through the matrix material 18 of the elongated member 12. The channels extend through the matrix material 18 of the elongated member 12. Figures 1-2 show an embodiment wherein channels 20 extend through, are or are otherwise disposed in, the matrix material 18.

Each channel 20 extends along the length of the elongated member 12. Each channel 20 is formed from the polymeric material that forms the matrix material 18. In other words, the wall that forms, or otherwise defines each channel, is composed of the polymeric material that constitutes the matrix material.

In an embodiment, channels 20 extend through the elongated member 12 in a pattern. Nonlimiting examples of suitable patterns include parallel pattern, and helical pattern.

In an embodiment, the plurality of channels 20 extend through the matrix material of the elongated member in a parallel pattern. The term "parallel," as used herein, refers to channels extending in the same direction along the length of the elongated member 12 the channels 20 maintaining a parallel orientation with respect to longitudinal axis, X, as shown in Figure 1. The parallel channels do not intersect each other. Figures 1 and 2 depict parallel channels 20.

In an embodiment, the channels 20 can extend through the matrix material in a helical or sinusoidal pattern. The term "helical," as used herein, refers to channels extending in a spiral manner along the length of the elongated member, the helical channels not intersecting.

Each channel 20 has a cross-sectional shape that is either a polygon or an ellipse. The cross-sectional shape for each channel can be the same or the cross-sectional shape for the channels can be different. Alternatively, the cross-sectional shape of two or more channels may be different. Nonlimiting examples of suitable cross-sectional shapes for the channels 20 include oval, ovoid, circle, curvilinear, triangle, square, rectangle, star, diamond, and combinations thereof.

The channels 20 have a diameter, D, as shown in Figure 2. The term "diameter," as used herein, is the longest axis of the channel 20, from a cross-sectional view. In an embodiment, the diameter, D, is from 500 µm, or 1000 µm, or 1500 µm, or 2000 µm, or 2500 µm, or 3000 µm to 3500 µm, or 4000 µm, or 4500 µm, or 5000 µm, or 5500 µm, or 6000 µm, or 7000 µm, or 8000 µm, or 9000 µm, or 10000 µm.

In an embodiment, the diameter, D, is from 1000 µm, or 1500 µm, or 2000 µm, or 2500 µm, or 3000 µm to 3500 µm, or 4000 µm, or 4500 µm, or 5000 µm.

The channels 20 are arranged in a spaced-apart manner from each other in the matrix material 18. The channels 20 may or may not be evenly spaced-apart with respect to each other. In an embodiment, the channels 20 are evenly spaced-apart from one another in the matrix material 18.

A spacing, S, of matrix material 18 (polymeric material) is present between the spaced-apart channels 20. The spacing, S, can be the same between all channels or can be different. In an embodiment, the spacing, S, is from 1 micrometer (µm), or 5 µm, or 10 µm, or 25 µm, or 50 µm, or 100 µm, or 150 µm, or 200 µm to 250 µm, or 300 µm, or 350 µm, or 400 µm, or 500 µm, or 1000 µm, or 2000 µm or 3000 µm.

The elongated member 12 includes from 10 percent by volume (vol%) to vol% of matrix material 18, with respective reciprocal volume percent being voidage. Volume percent is based on the total volume of the elongated member. The voidage is determined by the void space created by the channels 20. The reciprocal amount of volume for the channels (i.e., voidage) is from 90 vol% to 80 vol%.

In an embodiment, the elongated member 12 includes from 2, or 3, or 4, or 5, or 6 to 7, or 8, or 9, or 10, or 12, or 14, or 15, or 20, or 25, or 30, or 35, or 40, or 45, or 50, or 75, or 100, or 200, or 300, or 400, or 500 channels 20.

In an embodiment, the elongated member 12 includes from 10, or 12, or 14, or 15, or 20, or 25, or 30, or 35, or 40, or 45, or 50 to 60, or 75, or 80, or 90, or 100 channels 20.

The plurality of channels may comprise two or more embodiments disclosed herein.

### 3. Optical fiber

The present optical cable includes at least one optical fiber extending through at least one of the channels. Figures 1 and 2 show at least one optical fiber 22 extending through at least one channel 20. In other words, at least one optical fiber 22 is present in, or otherwise is located in, at least one channel 20. In this way, the matrix material 18 encases, or otherwise encircles, the optical fibers thereby protecting the optical fibers. Nonlimiting examples of suitable optical fiber include a single-mode fiber, a multi-mode fiber, a dispersion-shifted (DS) fiber, a non-zero dispersion (NZD) fiber, a Plastic Optical Fiber (POF) and combinations thereof.

The number of optical fibers extending through each channel may be the same or may be different. For example, some channels may contain one or more optical fibers while other channels contain no optical fibers. In an embodiment, at least two channels each encase at least one respective optical fiber-i.e., at least one optical fiber is present in two different channels. In another embodiment, at least one channel is free of optical fiber and at least one channel encases at least one optical fiber (or at least two optical fibers).

In an embodiment, each channel that contains at least one optical fiber also contains gel material.

In an embodiment, at least one optical fiber 22 extends through each channel 20.

In an embodiment, at least two optical fibers extend through each channel 20.

In an embodiment, one, some, or all of the channels contain from 1, or 2, or 3, or 4, or 5, or 10, or 20 to 30, or 40, or 50 optical fibers.

In an embodiment, one, some, or all of the channels contain from 1, or 2, or 3, or 4, or 5, or 6, or 7, or 8, or 9, or 10 to 12, or 15, or 17 to 20 optical fibers.

In an embodiment, the number of optical fibers in each channel is the same and the number of optical fibers extending through each respective channel is from 1, or 2, or 3, or 4, or 5, or 6, or 7 to 8, or 9, or 10 to 11, or 12, or 13, or 14, or 15. Figures 1-2 show each channel 20 holding the same number of optical fibers 22, each channel 20 holding five optical fibers 22. It is understood that each channel 20 can hold more, or can hold less, optical fibers than the five optical fibers per channel as shown in Figures 1-2.

In an embodiment, some of the optical fibers present in the channels may be replaced by non-transmitting glass fibers, in order to reach the optimal count within the channel, without varying the dimensions of the channel.

In an embodiment, the elongated member 12 includes from 2 to 500 channels and each channel contains from 1 to 50 optical fibers or as can be accommodated. From 5 to 1000 optical fibers 22 extend through the elongated member 12.

### 4. Gel material

In an embodiment, a gel material is located in each of the channels, along with the at least one optical fiber, or along with the at least two optical fibers in each channel. In a further embodiment, gel material is present in a channel only when at least one optical fiber is also present on the same channel. The gel material can be (i) a lubricant, (ii) a water blocking material, and (ii) a combination of (i) and (ii).

In an embodiment, the gel material includes a lubricant, such as a synthetic oil, that is compatible with the polymeric material of the matrix material 18, such that the gel material does not cause any substantial modification of the physicochemical and/or mechanical properties of the polymeric material contacted therewith. Nonlimiting examples of suitable synthetic oil exhibiting good compatibility with olefin polymeric materials can be selected among silicon oils, polyalphaolefin oils, vegetable oils, or poly-internal olefin oils.

In an embodiment, the gel material is a water-blocking material that is a hydrocarbon-based grease.

The gel material may include one or more of the following optional components: a thickening/thixotropic agent (such as silanized pyrogenic silica); an antioxidant, a waterblocking agent (water swellable powder composition such as, for example, a composition comprising a mixture of polyacrylate water swellable particles and inert talc particles), stabilizers (e.g., UV stabilizers), mineral fillers, polymer fillers, and any combination thereof.

The gel material may or may not include additives. The additive may be any additive disclosed herein.

In an embodiment, the gel material includes an antioxidant.

The gel material may comprise two or more embodiments disclosed herein.

In an embodiment, the elongated member 12 with the core structure can replace a core tube present in conventional optical cable.

### 5. Annular elongated member

Figure 3 shows an embodiment of an optical cable 110 not according to the claimed invention with an annular structure and having an annular elongated member 112. Annular elongated member 112 includes matrix material 118 and channels 120. Matrix material 118 and channels 120 may be any respective matrix material and channel configuration as disclosed above. The channels 120 are parallel to, or substantially parallel to, each other. Although Figure 3 shows five optical fibers 122 in each channel 20, it is understood that each channel 120 may hold more than five optical fibers, or may hold less than five optical fibers as disclosed above.

In an embodiment not according to the claimed invention, the optical cable 110 includes a strength member 123 with annular elongated member 112 encasing, or otherwise surrounding, the strength member 123.

In an embodiment, a gel material is present in each of the channels 120. The gel material can be any gel material as disclosed above.

### 6. Flat elongated member

Figure 4 shows an embodiment of an optical cable 210 having the structure of a flat elongated member 212. Flat elongated member 212 includes matrix material 218 and channels 220. Matrix material 218 and channels 220 may be any respective matrix material and channel configuration as disclosed above. The channels 220 are parallel to, or substantially parallel to, each other. While only a single layer of channels 218 is depicted in the flat elongated member 218 of Figure 4, it is understood that flat elongated member 218 may include one, or two, or three, or four, or five, or six, or more layers of channels.

Although Figure 4 shows five optical fibers 222 in each channel 220, it is understood that each channel 220 may hold more than five optical fibers, or may hold less than five optical fibers as disclosed above.

In an embodiment, a gel material is present in each of the channels 220. The gel material can be any gel material as disclosed above.

The flat elongated member 212 is different than, and is distinct from, optical fiber ribbon because the flat elongated member 212 includes channels 220. Optical fiber ribbon does not have channels. In an embodiment, the present optical cable excludes, or is otherwise void of, optical fiber ribbon.

### 7. Hybrid structure

In an embodiment, the elongated member has a hybrid structure. A "hybrid structure" is a cable containing both optical fiber and metal wire and/or metal cable. In the hybrid structure, one or more optical fibers are present in a first channel and one or more metal wire (such as copper wire, for example) are present in a second channel.

In an embodiment, the hybrid structure can have a two-lobe "figure 8" cross-sectional shape. Channels containing the optical fibers are located in a first lobe of the figure 8 structure. Channels containing metal wire (or metal cable) are located in a second lobe of the figure 8 structure.

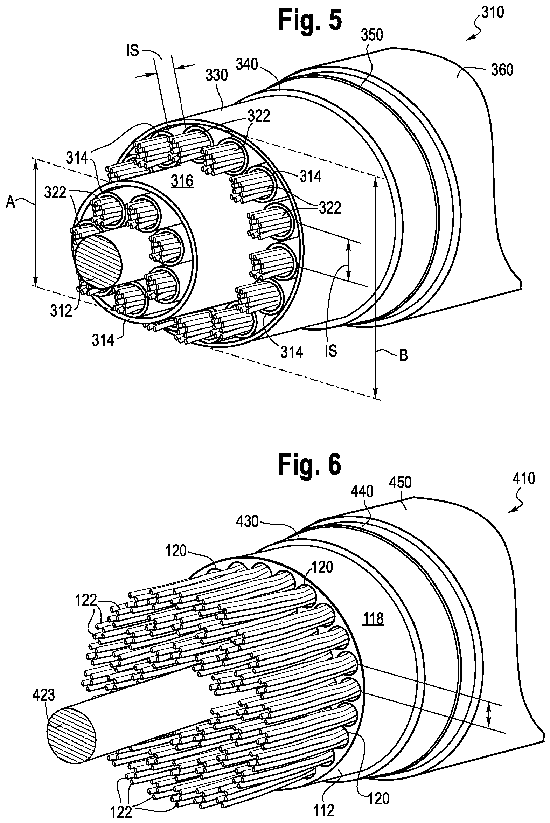

Figure 5 shows a conventional optical cable 310. Optical cable 310 is a conventional "loose tube" type optical cable and includes a strength member 312, and two layers of buffer tubes 314, inner layer of buffer tubes, layer A, and outer layer of buffer tubes, layer B.

Layer A and layer B of buffer tubes surround the strength member 312 with layer A surrounding the strength member 312 and layer B surrounding layer A. An inner jacket 316 is disposed between layer A and layer B.

Each buffer tube 314 envelopes a plurality of optical fibers 322. As a result of the buffer tubes, 314, optical cable 310 has interstitial spaces, IS, separating, and in between, the individual buffer tubes. Optical cable 310 also includes outer jackets 330, 340, 350, and 360.

Figure 6 shows an optical cable 410 not according to the claimed invention. Optical cable 410 includes the annular elongated member 112 of Figure 3. The annular elongated member 112 includes matrix material 118, with channels 120 extending therethrough. Gel material is present in each of the channels 118. Optical fibers 122 extend through the channels 118 as previously disclosed above. The annular elongated member 112 surrounds a strength member 423. The optical cable 410 also has outer jackets 430, 440, and 450. Nonlimiting examples of jackets 430, 440, 450 include armoring (metal), water blocking tapes/gels, strengthening members, and any combination thereof.

Comparing the conventional "loose tube" optical cable 310 of Figure 5 to the present optical cable 410 of Figure 6, is it apparent that optical cable 310 of Figure 5 has interstitial spaces, IS, between the buffer tubes 314; whereas no interstitial space is present between the channels 120 of the optical cable 410 of Figure 6. The presence of buffer tubes intrinsically results in interstitial space therebetween. The interstitial space between the buffer tubes is problematic because it is essentially "dead space" in the optical cable. The interstitial space is not utilized for either (1) holding optical fiber, and/or (2) is not utilized for structural or mechanical contributions to the optical cable.

Given the same core volume (volume of layer A and layer B in Figure 5) and the volume of the elongated member 118 of Figure 6, the present optical cable provides from 5% to 40% greater fiber density than conventional loose tube optical cable with buffer tubes.

In an embodiment, an elongated member having the core structure (such as elongated member 12 in Figure 1) can replace the strength member 423, thereby providing optical cable 410 with an additional increase in fiber density.

The present optical cable (10 and 210) advantageously eliminates, or otherwise avoids, dead space because the present optical cable eliminates the need for buffer tubes. With no dead space (no buffer tubes), the present optical cable increases optical fiber density for the optical cable. In the present optical cable, the only material between the channels is the matrix material. The matrix material enables a tighter packing of optical cables than can be obtained by buffer tubes because of the inherent "dead space" problem of buffer tubes. The matrix material also contributes to the structural integrity of the optical cable while simultaneously enabling a higher optical fiber density. The present optical cable is advantageous over optical cables that utilize buffer tubes.

In an embodiment, the optical cable includes an elongated member with a circle cross-sectional shape. The optical cable includes a matrix material that is a High Density Polyethylene for example Dow Continuum DMDA 1250-NT having the following properties: 0.955 gr/cc density (ASTM D792), Tensile Strength at yield 23.5 MPa (ASTM D638) and Tensile Modulus (1% secant) of 1350 MPa (ASTM D638). The optical cable is hereafter referred to as *optical cable 1.*

In an embodiment, *optical cable* 1 has one, some, or all of the following properties:
(i) a Shore D hardness from 55 to 95 and/or
(ii) a 1% secant modulus from 1000 to 3000MPa; and/or
(iii) a strain at break from 10 to 700%; and/or
(iv) a tensile strength from 20 MPa to 60 MPa.

It is specifically intended that the present disclosure not be limited to the embodiments and illustrations contained herein, but include modified forms of those embodiments including portions of the embodiments and combinations of elements of different embodiments as come within the scope of the following claims.

## Claims

1. An optical cable (10,210) comprising:
an elongated member (12, 212) comprising a matrix material (18,218) and a plurality of channels (20, 220) extending through the matrix material; and
at least one optical fiber extending through at least one channel;
**characterized in that**
the matrix material is selected from the group consisting of polybutylene terephthalate, polycarbonate, and combinations thereof;
a strength member is not present in the optical cable; and
the elongated member includes from 10 vol% to 20 vol% of matrix material based on the total volume of the elongated member, with the respective reciprocal volume percent being voidage that is the void space created by the channels, wherein the plurality of channels comprise from 80 vol% to 90 vol% of the elongated member based on total volume of the elongated member.

2. The optical fiber of claim 1 comprising at least two optical fibers, wherein one optical fiber extends through the channel and another optical fiber extends through another channel.

3. The optical cable of claim 2 comprising a gel material in each channel containing an optical fiber.

4. The optical cable of any of claims 1-3 wherein at least two optical fibers extend through each channel.

5. The optical cable of any of claims 1-4 wherein the elongated member has a structure selected from the group consisting of a core structure, an annular structure, a polygonal structure, a flat structure, and a hybrid structure.

6. The optical cable of any of claims 1-5 wherein each channel has a diameter from 500 microns to 10000 microns.

7. The optical cable of any of claims 1-6 wherein the elongated member comprises from 2 to 500 channels.

8. The optical cable of claim 7 wherein each channel contains from 2 to 50 optical fibers.

9. The optical cable of any of claims 3-8 wherein gel material is in direct contact with matrix material.

10. The optical cable of any of claims 1-8, wherein optical cable is void of a buffer tube.

## Patentansprüche

1. Optisches Kabel (10,210), umfassend:
ein längliches Element (12, 212), umfassend ein Matrixmaterial (18,218) und eine Vielzahl von Kanälen (20, 220), die sich durch das Matrixmaterial erstrecken; und
mindestens eine optische Faser, die sich durch mindestens einen Kanal erstreckt;
**dadurch gekennzeichnet, dass**
das Matrixmaterial aus der Gruppe ausgewählt ist, bestehend aus Polybutylenterephthalat, Polycarbonat und Kombinationen davon;
ein Festigkeitselement nicht in dem optischen Kabel vorhanden ist, und
das längliche Element von zu 10 Vol.- % bis 20 Vol.- % Matrixmaterial basierend auf dem Gesamtvolumen des länglichen Elements einschließt, wobei das jeweilige reziproke Volumenprozent Leerraum ist, der durch die Kanäle erzeugte Hohlraum ist, wobei die Vielzahl von Kanälen von zu 80 Vol.- % bis 90 Vol.- % des länglichen Elements basierend auf einem Gesamtvolumen des länglichen Elements umfassen.

2. Optische Faser nach Anspruch 1, umfassend mindestens zwei optische Fasern, wobei sich eine optische Faser durch den Kanal erstreckt und sich eine andere optische Faser durch einen anderen Kanal erstreckt.

3. Optisches Kabel nach Anspruch 2, umfassend ein Gelmaterial in jedem Kanal, der eine optische Faser enthält.

4. Optisches Kabel nach einem der Ansprüche 1 bis 3, wobei sich mindestens zwei optische Fasern durch jeden Kanal erstrecken.

5. Optisches Kabel nach einem der Ansprüche 1 bis 4, wobei das längliche Element eine Struktur aufweist, die aus der Gruppe ausgewählt ist, bestehend aus einer Kernstruktur, einer ringförmigen Struktur, einer polygonalen Struktur, einer flachen Struktur und einer Hybridstruktur.

6. Optisches Kabel nach einem der Ansprüche 1 bis 5, wobei jeder Kanal einen Durchmesser von 500 Mikrometer bis 10.000 Mikrometer aufweist.

7. Optisches Kabel nach einem der Ansprüche 1 bis 6, wobei das längliche Element von 2 bis 500 Kanäle umfasst.

8. Optisches Kabel nach Anspruch 7, wobei jeder Kanal von 2 bis 50 optische Fasern enthält.

9. Optisches Kabel nach einem der Ansprüche 3 bis 8, wobei Gelmaterial in direktem Kontakt mit Matrixmaterial ist.

10. Optisches Kabel nach einem der Ansprüche 1 bis 8, wobei das optische Kabel frei von einem Pufferschlauch ist.

## Revendications

1. Câble optique (10, 210) comprenant :
un élément allongé (12, 212) comprenant un matériau de matrice (18, 218) et une pluralité de canaux (20, 220) s'étendant à travers le matériau de matrice ; et
au moins une fibre optique s'étendant à travers au moins un canal ;
**caractérisé en ce que**
le matériau de matrice est choisi dans le groupe constitué de poly(téréphtalate de butylène), polycarbonate, et combinaisons de ceux-ci ;
un élément de résistance n'est pas présent dans le câble optique ; et
l'élément allongé comporte de 10 % en volume à 20 % en volume de matériau de matrice sur la base du volume total de l'élément allongé, le pourcentage en volume réciproque respectif étant la porosité qui est l'espace vide créé par les canaux, dans lequel la pluralité de canaux représente de 80 % en volume à 90 % en volume de l'élément allongé sur la base du volume total de l'élément allongé.

2. Fibre optique selon la revendication 1, comprenant au moins deux fibres optiques, dans lequel une fibre optique s'étend à travers le canal et une autre fibre optique s'étend à travers un autre canal.

3. Câble optique selon la revendication 2, comprenant un matériau de gel dans chaque canal contenant une fibre optique.

4. Câble optique selon l'une quelconque des revendications 1 à 3, dans lequel au moins deux fibres optiques s'étendent à travers chaque canal.

5. Câble optique selon l'une quelconque des revendications 1 à 4, dans lequel l'élément allongé a une structure sélectionnée dans le groupe constitué d'une structure de noyau, d'une structure annulaire, d'une structure polygonale, d'une structure plate, et d'une structure hybride.

6. Câble optique selon l'une quelconque des revendications 1 à 5, dans lequel chaque canal a un diamètre allant de 500 micromètres à 10 000 micromètres.

7. Câble optique selon l'une quelconque des revendications 1 à 6, dans lequel l'élément allongé comprend de 2 à 500 canaux.

8. Câble optique selon la revendication 7, dans lequel chaque canal contient de 2 à 50 fibres optiques.

9. Câble optique selon l'une quelconque des revendications 3 à 8, dans lequel le matériau de gel est en contact direct avec le matériau de matrice.

10. Câble optique selon l'une quelconque des revendications 1 à 8, dans lequel le câble optique est dépourvu de tube tampon.
